# EUROPEAN PATENT SPECIFICATION

(11) **EP 2 107 631 B1**
(45) Date of publication and mention of the grant of the patent: **25.01.2012**
(21) Application number: 09155808.0
(22) Date of filing: 21.03.2009
(51) Int. Cl.: H01M 8/18, H01M 8/04, H01M 8/06, H01M 16/00

(54) **Fuel cell with oxygen transport membrane**
Brennstoffzelle mit Sauerstofftransportmembran
Pile à combustible ayant une membrane de transport d'oxygène

(30) Priority: 03.04.2008 US 62315
(43) Date of publication of application: 07.10.2009
(73) Proprietor: Honeywell International Inc., Morristown, NJ 07962 (US)
(72) Inventor: Eickhoff, Steven J., Morristown, NJ 07962-2245 (US); Zhang, Chunbo, Morristown, NJ 07962-2245 (US)
(74) Representative: Buckley, Guy Julian

(56) References cited:
- EP-A2- 0 984 500
- WO-A2-2006/058774
- WO-A2-2007/092570
- US-A1- 2004 043 276
- US-A1- 2004 209 129
- US-A1- 2005 031 522

## Description

### Background

Fuel cell based power generators that use a proton exchange membrane (PEM) fuel cell and water-scavenging, self regulating, chemical hydride based hydrogen generator are sensitive to ambient humidity. This sensitivity may restrict the operation of the power generator to locations with adequate moisture in the environment. Low water content in PEM resulting from normal ambient humidity may also limit the maximum power that can be generated as opposed to power generator with sufficient water. In addition, the shelf life of such fuel cells may suffer from a continuous hydrogen discharge through the PEM.
The present invention provides a generator as defined in claim 1.
The generator may include the features of any one or more of dependent claims 2 to 6.
The present invention also provides a method as defined in claim 7.
The method may include the features of dependent claims 8 and/or 9.

### Brief Description of the Drawings

FIG. 1 is a block diagram of a PEM based power generator according to an example embodiment.

FIG. 2 is a block cross section diagram of an oxygen generator according to an example embodiment.

FIG. 3 is a system block diagram illustrating selected portions of a power generator according to an example embodiment.

FIG. 4 is a block diagram illustrating operation of control electronics for a power generator according to an example embodiment.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media such as memory or other type of storage devices. The term "computer readable media" is also used to represent any means by which the computer readable instructions may be received by the computer, such as by different forms of wired or wireless transmissions. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

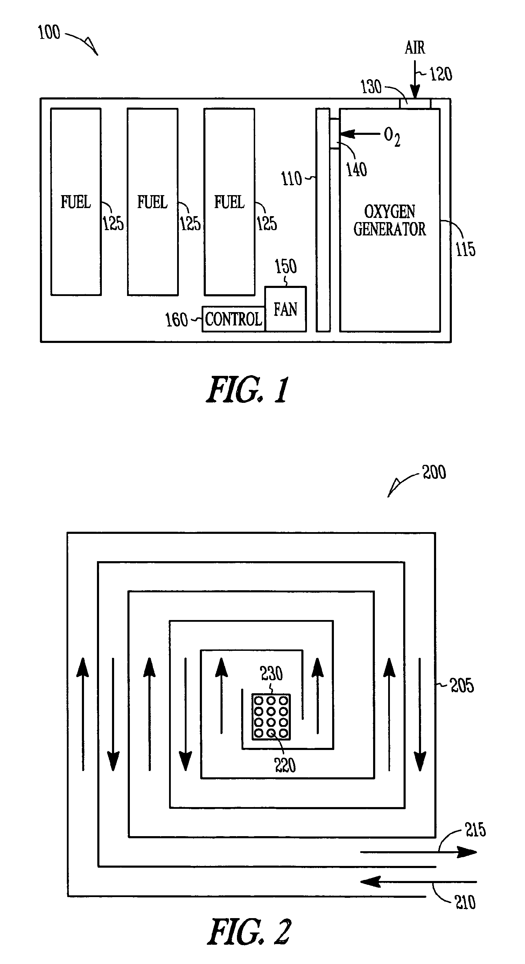

A power generator is shown generally at 100 in FIG. 1. A proton exchange membrane (PEM) based fuel cell 110 is coupled to an oxygen generator 115. In one embodiment, the oxygen generator 115 is an electrolytic oxygen generator coupled to a cathode of the fuel cell 110. The electrolytic oxygen generator 115 uses some of the electrical power generated by the fuel cell 110 to selectively transport oxygen from ambient air indicated at 120 to the fuel cell 110 cathode, where it is consumed in an electricity generating reaction between hydrogen, supplied by fuel 125 and the oxygen.

The electrolytic oxygen generator 115 functions as an oxygen-selective permeable membrane, allowing oxygen-ion permeation at elevated temperature but blocking other gases. Water generated by the electricity generating reaction is trapped between the fuel cell 110 cathode and the electrolytic oxygen generator 115 membrane. The effect of the membrane is three-fold. First, since the oxygen generator 115 membrane is effectively impermeable to water vapor, the fuel cell 110 power output is no longer sensitive to ambient humidity, because no water is lost to the ambient at low ambient humidity. Second, the water vapor raises the humidity of the fuel cell 110 cathode, which promotes a larger water concentration gradient within the membrane, driving more water vapor to a fuel cell 110 anode where it can react with the chemical hydride and generate more hydrogen, which is consumed by the fuel cell 110, thus increasing power output. Power output is also increased because higher water content in the membrane results in higher ionic conductivity (reduced ionic resistance), reducing resistive losses. Rough estimates of power output improvement may be 10X. Third, the oxygen generator 115 membrane effectively blocks hydrogen discharge to ambient which increases the shelf life and attainable total electricity. In one embodiment, the power generator 100 may be precharged with a desired amount of water vapor to enable it to operate at desired power levels. Cathode water impermeable membranes are known from WO2006/058774 and US2004/0043276. However, these documents do not refer to self regulating fuel cells and membranes (molecular sieves) are used to selectively separate oxygen from other air gases, such as nitrogen. Therefore, with a different purpose than in the present invention.

In various embodiments, fans or pumps may be used to control the flow of air, oxygen and hydrogen. At 130, a fan or pump are indicated in the ambient air flow path 120. At 140, a valve and optional fan are indicated to control oxygen flow to the fuel cell 110 anode. At 150, an optional fan or pump is shown to help circulate water vapor and hydrogen (H₂) around one or more sections of fuel 125 and in particular transport H₂ to the fuel cell 110 cathode. Control electronics are shown in block form at 160. The control electronics 160 may be used to control valves, fans / pumps, and heaters in power generator 100. The positions, types and sizes of the valves and fan / pump may be varied between different embodiments. In one embodiment, power generator 100 has a size that is approximately the same as a BA5390/U battery, about 62.2 x 111.8 x 127 mm.

At elevated temperatures and oxygen pressure or voltage gradient, membranes made of certain solid oxide (ex., SrCo_{0.8}Fe_{0.2}O_{3-δ}) can transport significant oxygen ions. The oxygen molecules dissociate in one side and recombine in another side. One example structure for an oxygen generator 115 is illustrated at 200 in FIG. 2. Structure 200 in one embodiment may optionally include a heat exchanger 205, which may be formed in the shape of Swiss roll. Air enters the heat exchanger 205 at 210, and oxygen depleted exhaust exits the heater exchanger at 215. The heat exchanger 205 minimizes heat loss to the ambient by preheating the entering oxygen rich air with the exiting oxygen depleted air. A heater, indicated at 230 is provided to heat the fibers to an operating temperature. Heater 230 may be a resistive type of heater that is thermally coupled to the membranes 220. In further embodiments, it is gas permeable and may surround the membranes to ensure sufficient heating of the membranes 220. The heater may take other forms, but should be sufficient to efficiently heat the membranes 220 to operational temperatures.

Oxygen is transported into the hollow fibers 220 and is delivered to the fuel cell 110. In further embodiments, the oxygen generator membrane may take the shape of membrane stack layers, or yet other shapes conducive to generating a desired amount of oxygen in a compact and efficient form wherein size limitations may apply.

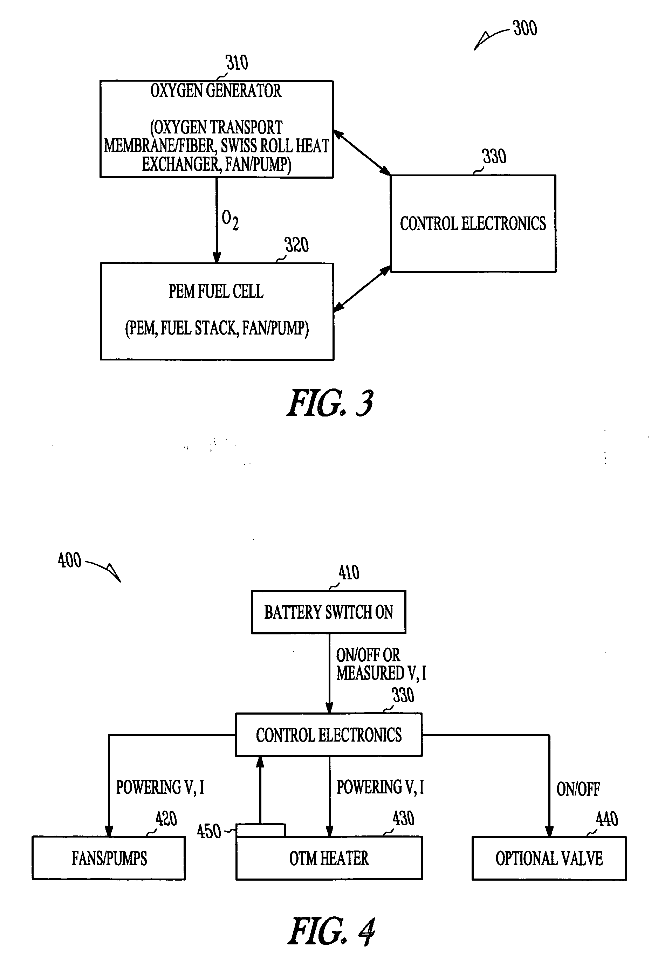

FIG. 3 is a system block diagram illustrating selected portions of a power generator 300 according to an example embodiment. Power generator 300 includes three main elements, an oxygen generator 310, a PEM fuel cell 320, which may have a hydrogen source, and control electronics 330. The control electronics 330 may be used to control operation of the power generator 300, including control of the temperature of the oxygen generator 310 and various valves and fans / pumps which may be used in the power generator 300.

FIG. 4 is a block diagram illustrating operation of a control system 400 for a power generator according to an example embodiment. A switch may be provided at 410 to turn on the power generator. The control system may operate in one of the two modes. In a simple control mode, when the power generator is switched on/off, the control electronics 330 is also switched on/off. The control electronics 330 outputs preset control parameters to fan/pump 420, oxygen transport generator membrane heater 430, and valves 440. In a feedback mode, power generator voltage (V) and/or current (I) are measured and input to control electronics 330. The measurements may be used to adjust output parameters to fan/pump 420, heater 430, and valve 440 for the desired power generator V and/or I. In addition, oxygen transport generator membrane temperature may be measured by a temperature sensor 450 that is thermally coupled to the oxygen transport generator membrane. The measured temperature may be used to control the oxygen transport generator membrane heater power. In a further embodiment, the control system 400 may include a battery for initially heating the oxygen generator membrane to speed up startup of the power generator.

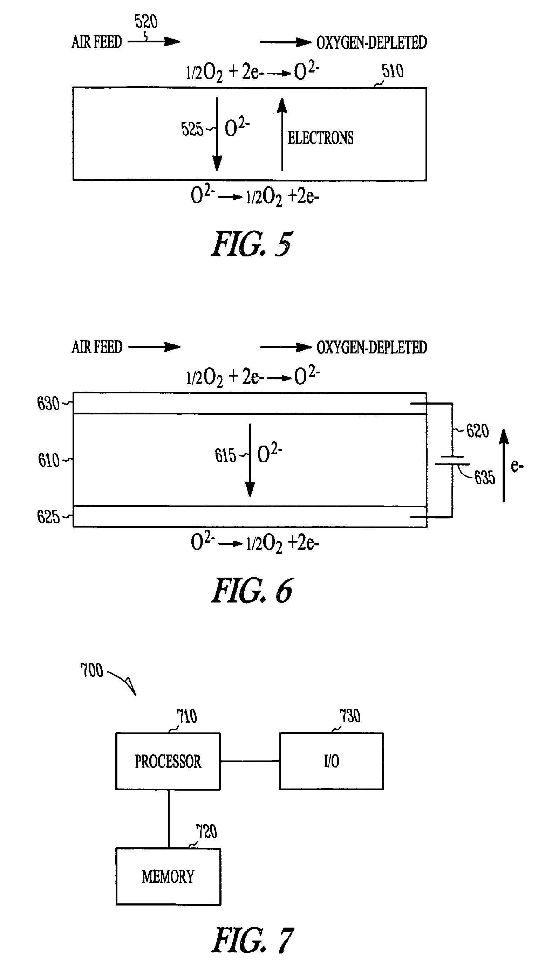

In one embodiment, the oxygen generator is a mixed conductor, which means that an oxygen generator membrane 510 in FIG. 5 can transport both ions and electrons. The membrane may be a dense metal oxide(s) which is non-gas-penneable (or the gas permeation is extremely small). The membrane 510 thickness can be from one micron to centimeters in some embodiments.

At high temperature (400-1000C), the membrane 510 adsorbs and dissociates oxygen molecules from an ambient air 520 or oxygen containing gas feed side. The dissociated oxygen is ionized. The ions 525 are transferred through the membrane as illustrated in FIG. 5. The ion transport is driven by the partial pressure difference in the two sides of the membrane, and electric field if voltage is applied to the two sides.

In one embodiment, ambient air is provided to the membrane 510. In this embodiment, the ambient air is sufficient for PEM fuel cell applications at a 10-100W level. In a further embodiment, compressed air is provided to the membrane 510 by means of a pump or pressurized source of air.

An ion conductor type oxygen transport membrane is illustrated at 610 in FIG. 6. In an ion conductor membrane, the membrane 610 transport ions 615 but not electrons. The electrons released by the recombination of the oxygen ions are transported back to the air side via an external circuit 620 that may be in electrical contact with membrane 610 via porous electrodes 625, 630. The ion transport is mainly driven by applied voltage 635 between the electrodes 625, 630. The generated high-purity 02 can be high pressure.

The membrane 610 is a dense metal oxide(s) in one embodiment, which is non-gas-permeable (or the gas permeation is extremely small). The membrane thickness can be from microns to centimeters in various embodiments.

Some examples of mixed conductor electrodes 510 include but are not limited to SrCo_{0.33}Fe_{0.67}O_{3-δ}, SrCo_{0.8}Fe₂O_{3-δ}, Sr_{0.7}M_{0.3}CoO₃, Sr_{0.97}Fe_{0.8}Ti_{0.2}O_{3-δ}, Sr_{0.97}Fe_{0.4}Ti_{0.6}O_{3-δ}, SrCo_{0.8}Ti_{0.2}O_{3-δ}, Ba_{0.5}Sr_{0.8}Co_{0.8}Fe_{0.2}O_{3-δ}, BaBiCo_{0.2}Fe_{0.8-x}O_{3-δ} (x=0.1~0.5), LaCo(M)O_{3-δ}, LaCo_{0.9}Cr_{0.1}O_{3-δ}, and many other mixed conducting oxides with similar characteristics. Such similar characteristics may include the ability to obtain O₂ from gasses containing O₂, such as ambient air, and also to be substantially water and water vapor impermeable. Some examples of ion conductor electrodes 610 include but are not limited to LaCaAlOx, LaSr Ga MgOx, BiYOx, CeGdOx, ZrSeOx, and YSZ to name a few.

In one embodiment, the control electronics may be a computer system 700 having one or more components of a block diagram as shown in FIG. 7. System 700 may include a processing unit 710, memory 720, and I/O unit 730. The processor 710 executes instructions stored in memory 720 and receives input and provides control signals via I/O 730.

Computer-readable instructions stored on a computer-readable medium such as memory 720 are executable by the processing unit 710 of the system 700. In some embodiments, the system may be a digital signal processor, ASIC, microprocessor, or other type of processor operating on a computer system, such as a personal computer, server or other computer system, and may be formed on a single circuit board, chip or substrate.

## Claims

1. An electrical power generator [100] comprising:
a fuel cell [110] having a proton exchange membrane [110] for generating electricity from hydrogen and oxygen;
hydrogen producing fuel [125] comprising a water vapor reactive chemical hydride coupled to the proton exchange membrane [110] for supplying hydrogen to the proton exchange membrane; and
an oxygen generator [115] coupled to the proton exchange membrane [110] for providing oxygen to the proton exchange membrane [110] and comprising an oxygen transport membrane;
the oxygen generator [115] membrane being effectively impermeable to water vapor;
such that water generated by the electricity generating reaction is driven to the fuel cell anode where it can react with the chemical hydride and generate more hydrogen.

2. The power generator [100] of claim 1 and further comprising a fan or pump [150] to circulate hydrogen about the proton exchange membrane [110], and to circulate water vapor to the hydrogen producing fuel [125].

3. The power generator [110] of claim 1 wherein the oxygen generator [115] comprises;
a heater [230] thermally coupled to the oxygen transport membrane [220].

4. The power generator [100] of claim 4 wherein the heater [230] heats the oxygen transport membrane [220] to a temperature of approximately 400-1000C.

5. The power generator of claim 4 wherein the oxygen generator further comprises a thermal isolation structure [205] to minimize heat loss.

6. The power generator of claim 4 and further comprising means [510, 620, 625, 630, 636] for driving oxygen through the oxygen transport membrane [220].

7. A method of producing electricity comprising:
heating an oxygen transport membrane [220] to an operational temperature, said oxygen transport membrane being effectively impermeable to water vapor and other gases;
providing an oxygen containing gas to the oxygen transport membrane [220];
transporting oxygen but not water vapor through the oxygen transport membrane;
providing oxygen from the oxygen transport membrane [220] to a proton exchange membrane based fuel cell [110];
providing hydrogen from a hydrogen producing fuel [125] comprising a water vapor reactive chemical hydride to the proton exchange membrane based fuel cell [110];
producing electricity and water vapor at the proton exchange membrane based fuel cell [110]; and
preventing water vapor from traveling through the oxygen transport membrane [220]; and
driving the water vapor to a fuel cell 110 anode side of the fuel cell where it can react with the chemical hydride and generate more hydrogen.

8. The method of claim 8 and further comprising controlling [330] the temperature of the oxygen transport [220] membrane as a function of measured temperature by a temperature sensor [450] that is thermally coupled to the oxygen transport generator membrane.

9. The method of claim 8 and further comprising controlling [330] a valve [140, 440] to control providing oxygen to the proton exchange membrane based fuel cell [110].

## Patentansprüche

1. Elektrischer Leistungsgenerator (100), der Folgendes umfasst:
eine Brennstoffzelle (110) mit einer Protonenaustauschmembran (110) zur Erzeugung von Elektrizität aus Wasserstoff und Sauerstoff;
Wasserstoff erzeugenden Brennstoff (125), der ein chemisches wasserdampfreaktives Hydrid umfasst und der an die Protonenaustauschmembran (110) gekoppelt ist, um Wasserstoff an die Protonenaustauschmembran zu liefern; und
einen Sauerstoffgenerator (115), der an die Protonenaustauschmembran (110) gekoppelt ist, um Sauerstoff an die Protonenaustauschmembran (110) zu liefern, und der eine Sauerstofftransportmembran umfasst;
wobei die Membran des Sauerstoffgenerators (115) für Wasserdampf effektiv undurchlässig ist;
so dass das durch die Elektrizität erzeugende Reaktion erzeugte Wasser zur Brennstoffzellenanode getrieben wird, wo es mit dem chemischen Hydrid reagieren und weiteren Wasserstoff erzeugen kann.

2. Leistungsgenerator (100) nach Anspruch 1, der ferner ein Gebläse oder eine Pumpe (150) umfasst, um den Wasserstoff um die Protonenaustauschmembran (110) zirkulieren zu lassen und um den Wasserdampf zum Wasserstoff erzeugenden Brennstoff (125) zirkulieren zu lassen.

3. Leistungsgenerator (100) nach Anspruch 1, wobei der Sauerstoffgenerator (115) Folgendes umfasst:
eine Heizvorrichtung (230), die thermisch an die Sauerstofftransportmembran (220) gekoppelt ist.

4. Leistungsgenerator (100) nach Anspruch 3, wobei die Heizvorrichtung (230) die Sauerstofftransportmembran (220) auf eine Temperatur von etwa 400-1000 °C heizt.

5. Leistungsgenerator nach Anspruch 4, wobei der Sauerstoffgenerator ferner eine Wärmeisolationsstruktur (205) umfasst, um den Wärmeverlust zu minimieren.

6. Leistungsgenerator nach Anspruch 4, der ferner Mittel (510, 620, 625, 630, 636) zum Treiben des Sauerstoffs durch die Sauerstofftransportmembran (220) umfasst.

7. Verfahren zum Erzeugen von Elektrizität, das umfasst:
Erwärmen einer Sauerstofftransportmembran (220) auf eine Betriebstemperatur, wobei die Sauerstofftransportmembran für Wasserdampf und andere Gase effektiv undurchlässig ist;
Liefern eines Sauerstoff enthaltenen Gases an die Sauerstofftransportmembran (220);
Transportieren von Sauerstoff, aber von keinem Wasserdampf durch die Sauerstofftransportmembran;
Liefern des Sauerstoffs von der Sauerstofftransportmembran (220) an eine auf einer Protonenaustauschmembran basierende Brennstoffzelle (110);
Liefern von Wasserstoff von einem Wasserstoff erzeugenden Brennstoff (125), der ein chemisches wasserdampfreaktives Hydrid umfasst, an die auf einer Protonenaustauschmembran basierende Brennstoffzelle (110);
Erzeugen von Elektrizität und Wasserdampf in der auf einer Protonenaustauschmembran basierenden Brennstoffzelle (110); und
Verhindern, dass sich Wasserdampf durch die Sauerstofftransportmembran (220) bewegt; und
Treiben des Wasserdampfs zu einer Anodenseite der Brennstoffzelle (110) der Brennstoffzelle, wo er mit dem chemischen Hydrid reagieren und weiteren Wasserstoff erzeugen kann.

8. Verfahren nach Anspruch 7, das ferner das Steuern (330) der Temperatur der Membran für den Sauerstofftransport (220) als Funktion der Temperatur, die durch einen Temperatursensor (450) gemessen wird, der thermisch an die Sauerstofftransport-Generatormembran gekoppelt ist.

9. Verfahren nach Anspruch 8, das ferner das Steuern (330) eines Ventils (140, 440) umfasst, um das Liefern von Sauerstoff an die auf einer Protonenaustauschmembran basierende Brennstoffzelle (110) zu steuern.

## Revendications

1. Générateur (100) d'énergie électrique comprenant une pile à combustible (110) qui présente
une membrane (110) d'échange de protons qui permet de produire de l'électricité à partir d'hydrogène et d'oxygène,
une cellule (125) de production d'hydrogène comprenant un hydrure chimique réagissant avec la vapeur d'eau couplé à la membrane (110) d'échangeur de protons et qui délivre de l'hydrogène à la membrane d'échange de protons et
un générateur (115) d'oxygène raccordé à la membrane (110) d'échangeur de protons, qui délivre de l'oxygène à la membrane (110) d'échangeur de protons et qui comprend une membrane de transport d'oxygène,
la membrane du générateur (115) d'oxygène étant efficacement imperméable à la vapeur d'eau,
de manière à ce que l'eau produite par la réaction de production d'électricité soit entraînée vers l'anode de la pile à combustible où elle peut réagir avec l'hydrure chimique et produire davantage d'hydrogène.

2. Générateur (100) d'énergie selon la revendication 1 et comprenant de plus une soufflante ou une pompe (150) qui font circuler l'hydrogène autour de la membrane (110) d'échange de protons et qui font circuler la vapeur d'eau vers le combustible (125) de production d'hydrogène.

3. Générateur (110) d'énergie selon la revendication 1, le générateur (115) d'oxygène comprenant un appareil de chauffage (230) raccordé thermiquement à la membrane (220) de transport d'oxygène.

4. Générateur (100) d'énergie selon la revendication 3, dans lequel l'appareil de chauffage (230) chauffe la membrane (220) de transport d'oxygène à une température d'environ 400 à 1 000°C.

5. Générateur d'énergie selon la revendication 4, dans lequel le générateur d'oxygène comprend de plus une structure (205) d'isolation thermique permettant de minimiser les pertes de chaleur.

6. Générateur d'énergie selon la revendication 4 et comprenant de plus des moyens (510, 620, 625, 630, 636) qui entraînent l'oxygène au travers le membrane (220) de transport d'oxygène.

7. Procédé de production d'électricité comprenant les étapes qui consistent à :
chauffer une membrane (220) de transport d'oxygène à une température de fonctionnement, ladite membrane de transport d'oxygène étant efficacement imperméable à la vapeur d'eau et aux autres gaz,
délivrer un gaz qui contient de l'oxygène à la membrane (220) de transport d'oxygène,
transporter l'oxygène mais pas la vapeur d'eau à travers la membrane de transport d'oxygène,
délivrer de l'oxygène provenant de la membrane (220) de transport d'oxygène à une pile à combustible (110) fonctionnant grâce à une membrane d'échange de protons,
délivrer de l'hydrogène provenant d'un combustible (125) de production d'hydrogène contenant un hydrure chimique réagissant avec la vapeur d'eau à la pile à combustible (110) fonctionnant grâce à une membrane d'échange de protons,
produire de l'électricité et de la vapeur d'eau au niveau de la pile à combustible (110) fonctionnant grâce à membrane d'échange de protons,
empêcher la vapeur d'eau de traverser la membrane (220) de transport d'oxygène et
envoyer la vapeur d'eau vers la pile (110) à combustible côté anode de la pile à combustible, où elle peut réagir avec l'hydrure chimique et produire davantage d'hydrogène.

8. Procédé selon la revendication 7, comprenant de plus l'étape qui consiste à contrôler (330) la température du transport (220) d'oxygène de la membrane en fonction de la température mesurée par un capteur (450) de température couplé thermiquement à la membrane du générateur de transport d'oxygène.

9. Procédé selon la revendication 8 et comprenant de plus l'étape qui consiste à contrôler (330) un clapet (140, 440) qui contrôle l'approvisionnement en oxygène de la pile à combustible (110) fonctionnant grâce à une membrane d'échange de protons.
